**Europäisches Patentamt**

**European Patent Office**

**Office européen des brevets**

(19)

Veröffentlichungsnummer: **0 263 973**
**A2**

# EUROPÄISCHE PATENTANMELDUNG

(21) Anmeldenummer: **87113141.3**

(51) Int. Cl.⁴ **G06F 11/00**

(22) Anmeldetag: **09.09.87**

(30) Priorität: **06.10.86 DE 3634019**

(43) Veröffentlichungstag der Anmeldung:
**20.04.88 Patentblatt 88/16**

(84) Benannte Vertragsstaaten:
**AT DE FR GB IT NL**

(71) Anmelder: **MAN Technologie GmbH**
**Dachauer Strasse 667 Postfach 50 04 26**
**D-8000 München 50(DE)**

(72) Erfinder: **Schmidt, Alfred, Dipl.-Ing.**
**Ostmarkstrasse 16**
**D-8000 München 70(DE)**
Erfinder: **Pöttig, Wolfram, Dipl.-Ing.**
**Barerstrasse 82**
**D-8000 München 40(DE)**

(54) Vorrichtung und Verfahren zum seriellen Datenaustausch zwischen mehr als zwei Teilnehmern.

(57) Bei einer Vorrichtung zum seriellen Datenaustausch zwischen mehr als zwei Teilnehmern (T1 ... Tn) weist jeder Teilnehmer nur einen einzigen zentralen Rechner (CPU) mit nur einer seriellen Schnittstelle (TˣD. RˣD) für den Datenaustausch auf und ist über zwei Koppler mit zwei voneinander unabhängigen Datenbussenverbunden. Jeder der beiden Koppler ist unabhängig vom anderen vom Rechner (CPU) auf Empfang und oder Senden schaltbar. Dem Rechner (CPU) ist eine elektronische Überwachungseinrichtung (Watchdog) zugeordnet, die ihn ständig überwacht. dahingehend, daß bei Auftreten von Fehlfunktionen oder Störungen die Signalleitungen (DE1-DE1 bzw. DE2-DE2) für "Freigabe Senden" zu den beiden Kopplern und damit eine Ausgabe von Daten blockiert wird Damit ist ein defekter Teilnehmer wirksam aus dem Verkehr zu ziehen und der Datenverkehr unter den anderen. ordnungsgemäß arbeitenden Teilnehmern über die beiden Datenbusse weiterhin möglich

Fig 2

Die Erfindung betrifft nach dem Oberbegriff des Anspruchs 1 eine Vorrichtung zum seriellen Datenaustausch zwischen mehr als zwei Teilnehmern, von denen jeder zwei an einen Rechner (CPU) einerseits und an je einen Datenbus andererseits angeschlossene Koppler aufweist, wobei das Senden bzw. Empfangen von Daten über einen der beiden Datenbusse über den jeweiligen Koppler durch die teilnehmerinternen Rechner (CPU) gesteuert ist, sowie nach dem Oberbegriff des Anspruchs 2 ein Verfahren zum Abkoppeln eines defekten Teilnehmers aus dem Datenverkehr mit anderen Teilnehmern, damit der Datenverkehr zwischen den anderen nicht defekten Teilnehmern über die beiden Datenbusse unter Verwendung der Vorrichtung nach Anspruch 1 aufrechterhalten werden kann.

Bei bekannten Vorrichtungen zum seriellen Datenaustausch zwischen mehr als zwei Teilnehmern besitzt jeder Teilnehmer zwei an jeweils einem Datenbus und jeweils einem eigenen Rechner angeschlossene Koppler. Jeder der beiden Rechner verfügt über eine eigene serielle Schnittstelle, über die der Datenverkehr bei entsprechend kopplerintern durchgeschalteter Sende-und/oder Empfangsleitung erfolgen kann. Solche zweikanalige Datenübertragungssysteme sind regelmäßig mit einem redundanten Bussystem, d.h. zwei voneinander unabhängigen, einen seriellen Datenverkehr erlaubenden Datenbus ausgestattet. Trotz dieser Redundanz ergibt sich folgende Problematik: Erhalten die Teilnehmer über einen längeren Zeitraum hinweg keine Mitteilungen, so schalten diese in der Regel nach einer definierten Zeitspanne auf den zweiten, die Redundanz bildenden Datenbus um. D. h., die Teilnehmer sind in der Lage, durch ihre Einrichtungen Störungen und Defekte in einem Datenbus festzustellen. Ein sendender Teilnehmer erkennt dies beispielsweise wegen fehlender Quittierung. Der angesteuerte, für den Empfang der Sendung vorgesehene Teilnehmer kann einen solchen Datenbus-Betriebsschaden solange nicht erkennen, bis er selbst sendet. Dieser Mangel kann, wie gesagt, durch Umschalten auf den Reservebus behoben werden. Es kann nun aber der Fall auftreten, daß der Datenverkehr nicht durch einen Schaden oder Störungen in dem Datenbus gestört bzw. blockiert ist, sondern dadurch, daß ein Teilnehmer aufgrund eines Hardware-oder Softwarefehlers durch ständiges Senden beide Datenbusse belegt. In einem solchen Fall ist ein Datenverkehr vollständig unmöglich.

Es ist daher Aufgabe der Erfindung, eine einfache Lösung anzugeben, die sicherstellt, daß ein defekter Teilnehmer keine Blockade der beiden Datenbusse herbeiführen kann.

Diese Aufgabe ist erfindungsgemäß durch eine Vorrichtung zum seriellen Datenaustausch mit Merkmalen gemäß Anspruch 1 und ein Verfahren zum Abkoppeln eines defekten Teilnehmers aus dem Datenverkehr mit Merkmalen gemäß Anspruch 2 gelöst.

Einzelheiten der Erfindung und deren Vorteile sind nachstehend anhand der Zeichnung näher erläutert. In der Zeichnung zeigen:

Fig. 1 schematisiert eine Vorrichtung zum Datenaustausch zwischen mehr als zwei Teilnehmern,

Fig. 2 Einzelheiten eines am Datenaustausch beteiligten Teilnehmers,

Fig. 3 eine Ausführungsform der in einem Teilnehmer enthaltenen Überwachungseinrichtung (Watchdog) für den zentralen Rechner (CPU).

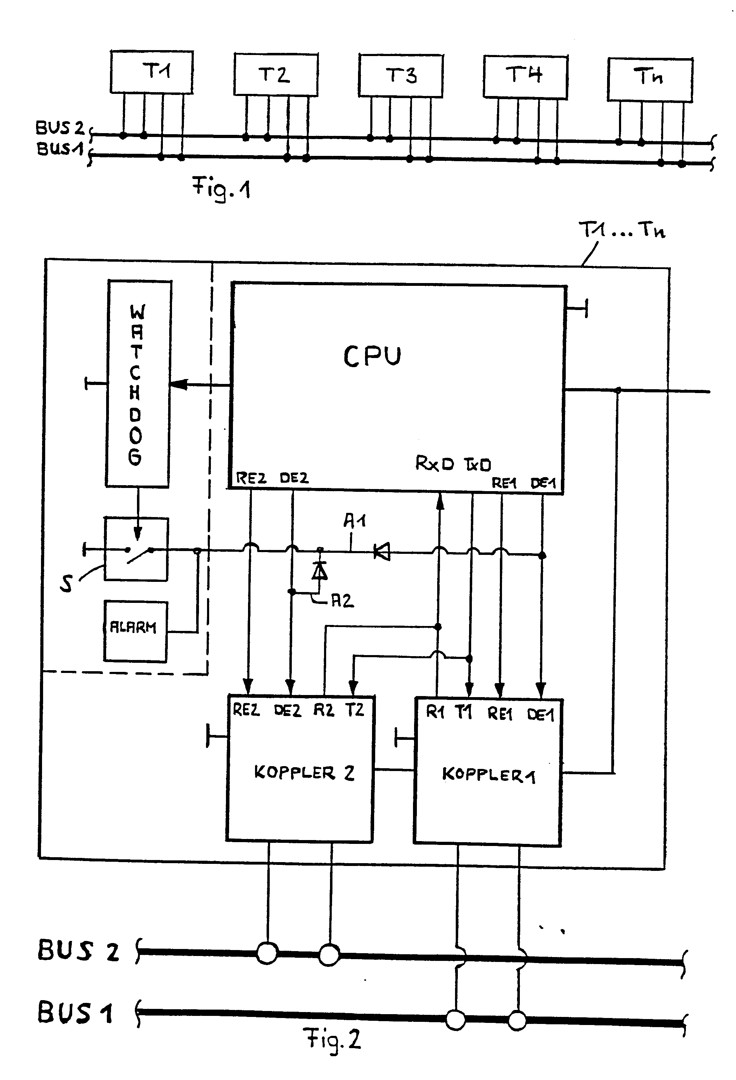

Wie aus Fig. 1 ersichtlich, sind im Rahmen einer nicht näher spezifizierten Gesamtanordnung, z. B. eines Steuerungs-und oder Überwachungssystems mehrere mit T1, T2, T3. T4 ...Tn bezeichnete Teilnehmer T vorhanden, deren Anzahl n größer als 2 ist und zwischen denen zur Erfüllung der systemimmanenten Aufgaben ein serieller Datenverkehr durch Senden und Empfangen von Signalen bzw. Befehlen stattfindet. Jeder dieser Teilnehmer (T1 ... Tn) umfaßt einen einzigen zentralen Rechner (CPU) mit einer einzigen seriellen Schnittstelle ($R^xD$, $T^xD$) für den Datenaustausch mit den anderen Teilnehmern. Der Rechner (CPU) ist über zwei Koppler - Koppler 1 und Koppler 2 - mit zwei voneinander unabhängigen Datenbussen - BUS1 und BUS2 - verbunden. Bei diesen für einen seriellen Datenaustausch ausgebildeten Kopplern handelt es sich beispielsweise um elektronische Treiberbausteine entsprechend den EIA-Normen RS-485 oder RS-422. Entsprechend hierauf sind die beiden Datenbusse für den Datenaustausch abgestimmt.

Jeder der beiden Koppler eines Teilnehmers (T1 ... Tn) ist unabhängig vom anderen vom zentralen Rechner (CPU) auf Empfang und/oder Senden - schaltbar. Hierzu ist der Koppler 1 mit dem Rechner (CPU) zwischen deren beiden jeweils mit (DE1) bezeichneten Anschlüssen durch eine das Signal "Freigabe Senden über BUS1" übertragende Signalleitung sowie eine weitere, zwischen deren beiden jeweils mit (RE1) bezeichneten Anschlüssen durch eine das Signal "Freigabe Empfang über BUS1" übertragende Signalleitung verbunden. Entsprechend ist auch der Koppler 2 mit dem Rechner (CPU) zwischen deren beiden jeweils mit (DE2) bezeichneten Anschlüssen durch eine das Signal "Freigabe Senden über BUS 2" übertragende Signalleitung sowie eine weitere, zwischen deren beiden mit (RE2) bezeichneten Anschlüssen durch eine das Signal "Freigabe Empfang über BUS2" übertragende Signalleitung verbunden. Die serielle Schnittstelle (T×D) des Rechners (CPU) für Ausgabe von Daten ist mit dem Sendesignaleingang (T1) des Kopplers 1 über eine Sendeleitung sowie über eine von letzterer abzweigende Sendeleitung mit dem Sendesignaleingang (T2) des Kopplers 2 verbunden. Die serielle Schnittstelle (R×D) des Rechners (CPU) für Empfang von Daten ist mit dem Empfangssignalausgang (R1) des Kopplers 1 über eine Empfangsleitung sowie eine mit letzterer verbundene Empfangsleitung mit dem Empfangssignalausgang (R2) des Kopplers 2 verbunden. Auf diese Weise ist es möglich, daß bei entsprechender Freigabe der Datenübertragung entweder Daten vom Rechner (CPU) über beide Datenbusse an andere Teilnehmer gesendet werden können oder gleichzeitig ein Senden von Daten über einen Datenbus und Empfangen von Daten über den anderen Datenbus von und zum Rechner (CPU) möglich ist.

Des weiteren ist dem Rechner (CPU) jedes Teilnehmers, um letzteren im Falle eines Defektes oder einer Betriebsstörung vom Datenbus abzutrennen und den Datenverkehr zwischen den anderen, nicht defekten Teilnehmern über die beiden Datenbusse auf keinen Fall zu behindern, eine elektronische Überwachungseinrichtung zugeordnet. Letztere ist in der Zeichnung mit der in Fachkreisen hierfür üblichen Bezeichnung "Watchdog" ausgewiesen. Durch eine derartige Überwachungseinrichtung wird der Rechner (CPU) ständig hinsichtlich seiner Funktionen überwacht, dahingehend, daß bei Fehlfunktionen im Rechner (CPU) die Freigabe der SendeSignalleitungen zu den beiden Kopplern und damit eine Ausgabe von Daten in die beiden Datenbusse blockiert wird.

In Fig. 2 ist der diesbezügliche Signalfluß über von den Sendesignalfreigabeleitungen zwischen DE1-DE1 und DE2-DE2 abzweigende Ansteuerleitungen A1, A2 mit jeweils in Signalflußrichtung durchlässiger Diode dargestellt. Diese Ansteuerleitungen sind vereinigt an einem Eingang eines Sperrschalters S angeschlossen, der durch einen Befehl der Überwachungseinrichtung (Watchdog) bei Feststellung einer Fehlfunktion des Rechners (CPU) geschlossen bzw durchgeschaltet wird, z.B. durch einen Steuertransistor, ein Relais oder dergleichen gebildet ist und nach Schließen bzw. Durchschalten ein etwaig vom Rechner (CPU) an die Signalleitung "Freigabe Senden" (DE1-DE1 bzw. DE2-DE2) abgegebenes Signal auf Masse zieht, so daß letzteres nicht im Koppler 1 bzw. Koppler 2 wirksam werden kann. Dem Sperrschalter S kann eine, wenn letzterer geschlossen bzw. durchgeschaltet ist, aktivierte und ein akustisches und/oder optisches Alarmsignal abgebende Alarmeinrichtung (ALARM) zugeordnet sein

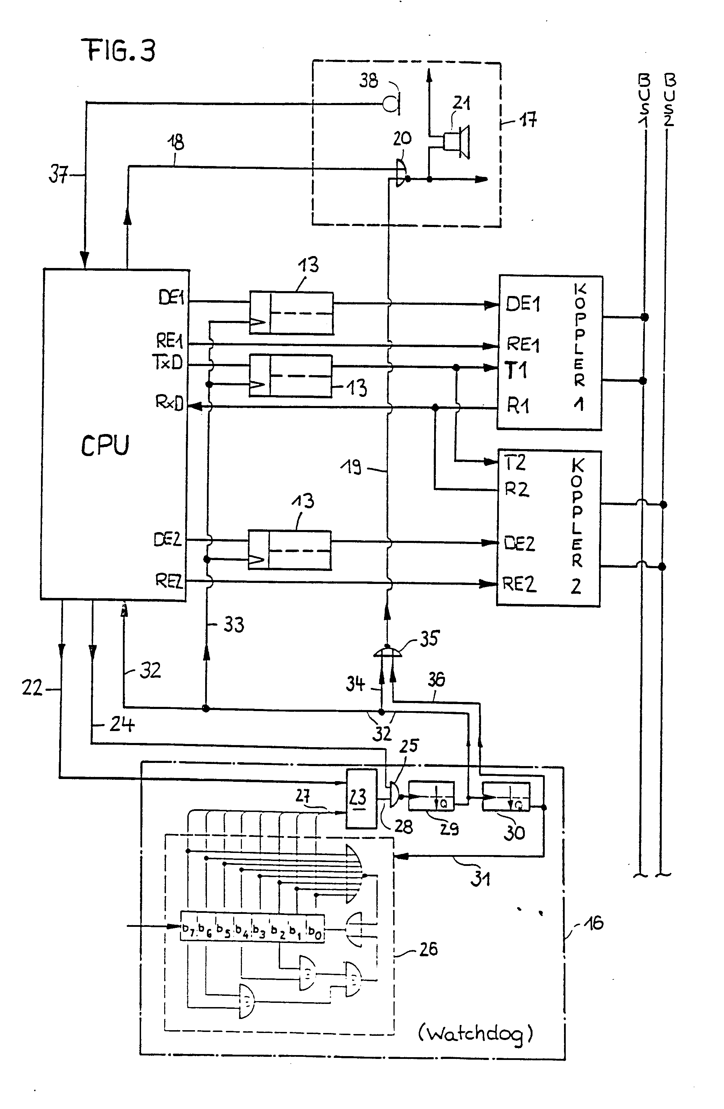

Eine andere Signalführung mit einer Ausführungsform der Überwachungseinrichtung (Watchdog) ist in Fig. 3 dargestellt und nachstehend erläutert.

In den Rechner (CPU) sind durch softwaremäßige Implementierung alle notwendigen Überwachungsaufgaben einprogrammiert. Sobald Fehler bzw. Störungen in der Funktion des Rechners (CPU) oder in den Buskopplern (1 + 2) festgestellt werden, ergeht vom Ausgang DE1 und/oder DE2 und/oder T×D des Rechners (CPU) ein Signal über die angeschlossene Signalübertragungsleitung zu einem in letztere eingeschalteten Speicherglied (13) und von dort zu den beiden Buskopplern (1 + 2) mit der Folge, daß in diesen eine Freigabe "Senden" blockiert wird. Die Funktionsfähigkeit des Rechners (CPU) wird von der Überwachungseinrichtung (Watch dog) überwacht, der das Bezugszeichen (16) zugewiesen ist. Diese weist einen Vergleicher (23), ein NAND-Gatter (25), einen Pseudozufalls-Zahlengenerator (26) und zwei Monoflops (29, 30) auf.

Eine Alarmeinrichtung (17) dient zur Ausgabe von Alarmsignalen, wenn in den Buskopplern (1 + 2) oder im Rechner (CPU) eine Fehlfunktion aufgetreten ist. Die Aktivierung der Alarmeinrichtung (17) erfolgt vom Rechner (CPU) über eine Alarmsignalleitung (18) sowie von der Überwachungseinrichtung (Watchdog) (16) her über eine Alarmsignalleitung (19), die beide zu einem NOR-Gatter (20) führen, an dem ausgangs ein Alarmsignalgeber (21), z.B. ein Summer angeschlossen ist. Für die Überwachung des Rechners (CPU) erscheint in dessen Ausgangsleitung (22) ein Kontrollsignal in Form eines Kontroll-bzw. Datenwortes von beispielsweise 8 bit, das in den Vergleicher (23) eingespeist wird. Außerdem wird vom Rechner (CPU) über einen Kanal (24) die Ausgabe eines Kontrollsignales signalisiert und dem NAND-Gatter (25) zugeführt, dessen anderer Eingang mit dem Ausgang des Vergleichers (23) verbunden ist.

Wird nun zum Kontrollsignal des Rechners (CPU) ein Prüfsignal in Form eines Prüf-bzw. Testwortes von gleicher Länge des Datenwortes vom Pseudozufalls-Zahlengenerator (26) erzeugt, so wird dieses über einen Datenbus (27) in den Vergleicher (23) geleitet und dort mit dem Kontrollwort verglichen Am Ausgang (28) erscheint bei vollständiger Übereinstimmung dann ein Signal, das bei gleichzeitiger Signalgabe über den Kanal (24) am Ausgang des NAND-Gatters (25) einen Triggerimpuls in das nicht retriggerbare Monoflop (29) liefert Dieses triggert nach Ablauf einer gewissen Zeitspanne durch die abfallende Impulsflanke das nachgeschaltete, ebenfalls nicht retriggerbare Monoflop (30) Dieses fällt ebenfalls nach einer gewissen Zeitspanne ab und liefert damit dem Pseudozufalls-Zahlengenerator (26) über den Kanal (31) den erforderlichen Schiebetakt. Bei Abfallen des Monoflops (29) wird dies über eine Quittungsleitung (32) dem Rechner (CPU) rückgemeldet.

An dieser Quittungsleitung (32) sind über einen Kanal (33) auch die drei Speicherglieder (13) und über einen Kanal (34) ein weiteres NOR-Gatter (35) angeschlossen, dessen zweiter Eingang über einen Kanal (36) mit dem Ausgang des zweiten Monoflops (30) in Verbindung steht. Am Ausgang dieses NOR-Gatters (35) ist der eine Eingang (19) der Alarmeinrichtung (17) angeschlossen. Wird nun beispielsweise durch einen Defekt des Rechners (CPU) die Folge der Kontrollwörter nicht innerhalb bestimmter Zeitfenster ausgegeben, dann wird das erste Monoflop (29) nicht gestartet, so daß nach Abfallen des zweiten Monoflops (30) beide Monoflops (29, 30) abgefallen sind und dann über das NOR-Gatter (35) die Alarmeinrichtung (17) aktiviert wird. In gleicher Weise wird auch ein Fehler in der Überwachungseinrichtung (Watchdog 16) registriert und gemeldet, weil durch Ausfall eines der beiden Monoflops (29,30) das NOR-Gatter (35) direkt angesteuert wird oder bei defektem Pseudozufalls-Zahlengenerator (26) der Vergleicher (23) infolge eines falschen Prüfwortes keinen Triggerimpuls ausgibt. Hierdurch ist ein weitgehend optimiertes Überwachungssystem für den Rechner (CPU) gegeben. Außerdem können besondere softwaregestützte Maßnahmen zur Aufdeckung verdeckter Fehler in der Überwachungseinrichtung (Watchdog 16) vorgesehen sein, dadurch, daß der Rechner (CPU) falsche Kontrollworte oder über den Kanal (24) falsche Kontrollsignale ausgibt und die Reaktion der Überwachungseinrichtung (Watchdog 16) über das ihm über die Quittungsleitung (32) gelieferte Signal auf Richtigkeit überprüft. Im Fehlerfall wird die Alarmeinrichtung (17) über die Alarmsignalleitung (18) aktiviert. Die Alarmeinrichtung (17) wird auch dann aktiviert, wenn der Rechner (CPU) zwar periodisch richtige Datenwörter ausgibt, jedoch in einem zu großen Zeitintervall, oder wenn die Meldezeit des Rechners (CPU) unterschritten wird. Die Speicherglieder (13) dienen dazu, die Auswirkung von an den Ausgängen DE1, DE2, $T^X D$ des Rechners (CPU) erscheinenden Ausgangssignalen auf den angesteuerten Buskoppler (1 + 2) zu verzögern. Durch Ausgabe eines neuen richtigen Kontrollwortes und Triggerung des Monoflops (29) wird die Funktionsfähigkeit des Rechners (CPU) und damit die Gültigkeit des am Ausgang DE1, DE2, $T^X D$ erscheinenden Signals bestätigt, welches das Speicherglied (13) nach Triggerung durch das Quittungssignal an seinem Ausgang übernimmt und dann den Buskopplern (1 + 2) für eine etwaige Sendefreigabe zugeführt wird. Darüber hinaus werden vom Rechner (CPU) auch die Funktionsfähigkeit der Alarmeinrichtung (17) sowie des NORGatters (35) überprüft, und zwar durch Abfrage über eine Alarmmeldeleitung (37), die an einen, z. B. akustischen Alarmdetektor (38) angeschlossen ist.

Mit der beschriebenen Überwachungseinrichtung (Watchdog) wird der bisher bei redundanten Datenaustauschsystemen erforderliche zweite zentrale Rechner durch eine vergleichsweise billige elektronische Schaltung ersetzt, die in jedem Fall sicherstellt, daß bei Fehlern oder Störungen im erfindungsgemäß einzigen zentralen Rechner (CPU) eines Teilnehmers (T1 ... Tn) die beiden Datenbusse z. B. nicht durch permanentes Senden blockiert werden. Auf diese Weise ist somit auch bei einem Defekt des zentralen Rechners (CPU) eines Teilnehmers ein ungehinderter Datenaustausch der anderen an den beiden Datenbussen angeschlossenen Teilnehmer sichergestellt.

Ein weiterer Vorteil der Erfindung ist, daß durch partielle Redundanzmaßnahmen (z. B. am Datenbus zwischen den Teilnehmern) die Verfügbarkeit des Gesamtsystems entscheidend erhöht werden kann. Gerade Datenbusse mit langen Verbindungsstrecken und vielen angeschlossenen Teilnehmern sind sehr ausfallgefährdet. Deshalb kann es wünschenswert sein, den seriellen Datenbus redundant auszustatten, die einzelnen Unterfunktionen ( = Teilnehmer) jedoch entsprechend ihrer Wichtigkeit fallweise redundant oder nicht redundant auszubauen.

## Ansprüche

1. Vorrichtung zum seriellen Datenaustausch zwischen mehr als zwei Teilnehmern, von denen jeder über zwei an einen Rechner (CPU) einerseits und an je einem Datenbus andererseits angeschlossene Koppler aufweist und das Senden bzw. Empfangen von Daten über einen der beiden Datenbusse über den jeweiligen Koppler durch die teilnehmerinternen Rechner (CPU) gesteuert ist, dadurch gekennzeichnet, daß jeder Teilnehmer (T1...Tn) nur einen einzigen zentralen Rechner (CPU) mit nur einer einzigen seriellen Schnittstelle ($T^X D$, $R^X D$) für den Datenaustausch aufweist, der über zwei Koppler mit zwei voneinander unabhängigen Datenbussen verbunden ist, wobei jeder Koppler unabhängig vom anderen vom Rechner (CPU) auf Empfang und oder Senden schaltbar ist, und daß dem Rechner (CPU) eine elektronische Überwachungseinrichtung (Watchdog) zugeordnet ist, die bei Fehlfunktionen des Rechners (CPU) die Freigabe der Sendeleitungen (DE1-DE1, DE2-DE2) und damit die Ausgabe von Daten über die Koppler blockiert.

2. Verfahren zum Abkoppeln eines defekten Teilnehmers aus dem Datenverkehr mit nderen Teilnehmern zur Aufrechterhaltung des Datenverkehrs zwischen den anderen nicht defekten Teilnehmern über die beiden Datenbusse unter Verwendung der Vorrichtung nach Anspruch 1, dadurch gekennzeichnet,
daß bei nicht defektem zentralen Rechner (CPU) eines Teilnehmers (T1...Tn) die Freigabe der Sende-und Empfangsleitungen über die beiden Koppler sowie der Empfang von Daten über die einzige serielle Schnittstelle des zentralen Rechners (CPU) erfolgt und die Funktionen des zentralen Rechners (CPU) durch die elektronische Überwachungseinrichtung (Watchdog) ständig überwacht werden, dahingehend, daß bei Fehlfunktionen des zentralen Rechners (CPU) die Freigabe der Sendeleitungen zu den beiden Kopplern und damit eine Ausgabe von Daten in die beiden angeschlossenen Datenbusse blockiert wird.

3. Vorrichtung nach Anspruch 1, dadurch gekennzeichnet, daß der einzige zentrale Rechner (CPU) eines Teilnehmers (T1 ...Tn)mit jedem der beiden Koppler zwischen jeweils zwei Anschlüssen (DE1-DE1 bzw. DE2-DE2) durch jeweils eine das Signal "Freigabe Senden über BUS 1 bzw. BUS 2" übertragende Signalleitung sowie über jeweils eine weitere zwischen jeweils zwei weiteren Anschlüssen (RE1-RE1 bzw. RE2-RE2) verlaufende Signalleitung, die das Signal "Freigabe Empfang über BUS 1 bzw BUS 2" überträgt, verbunden ist, daß ferner die serielle Schnittstelle (TˣD) des zentralen Rechners (CPU) für Senden von Daten mit dem Signaleingang (T1) des Kopplers 1 über eine Sendeleitung sowie über eine von letzterer abzweigende Sendeleitung mit dem Sendesignaleingang (T2) des Kopplers (2) verbunden ist. während die serielle Schnittstelle (RˣD) des zentralen Rechners (CPU) für Empfang von Daten mit dem Empfangssignalausgang (R1) des Kopplers 1 über eine Empfangsleitung sowie eine mit letzterer verbundene Empfangsleitung mit dem Empfangssignalausgang (R2) des Kopplers 2 verbunden ist.

4. Vorrichtung oder Verfahren nach Anspruch 1 bzw. 2. dadurch gekennzeichnet. daß im Falle einer Fehlfunktion oder Störung des zentralen Rechners (CPU) und nach Feststellung dieses Mißstandes durch die Überwachungsein richtung (Watchdog) durch diese eine Blockierung von "Freigabe Senden" über die Sende-Signalleitung extern des zentralen Rechners (CPU) erfolgt. und zwar über je eine von einer Signalleitung "Freigabe Senden" abzweigende Ansteuerleitung (A1 bzw A2) mit jeweils in Signalflußrichtung durchlässiger Diode. welche Ansteuerleitungen vereinigt an einem Eingang eines Sperrschalters (S) angeschlossen sind. der durch einen Befehl der Überwachungseinrichtung (Watchdog) bei Fehlfunktionen des zentralen Rechners (CPU) geschlossen bzw. durchgeschaltet wird und dann ein etwaiges vom Rechner (CPU) an eine Signalleitung "Freigabe Senden" abgegebenes Signal auf Masse zieht und dieses somit nicht im Koppler 1 bzw. Koppler 2 wirksam werden kann.

5. Vorrichtung oder Verfahren nach Anspruch 4, dadurch gekennzeichnet, daß bei Schließen bzw. Durchschalten des Sperrschalters (S) über eine Alarmeinrichtung ein akustisches und/oder optisches Alarmsignal ausgelöst wird.

6. Vorrichtung oder Verfahren nach Anspruch 1 bzw. 2, dadurch gekennzeichnet, daß im Fall einer Fehlfunktion oder Störung des zentralen Rechners (CPU) und nach Feststellung dieses Mißstandes durch die Überwachungseinrichtung (Watchdog) durch diese eine Blockierung von "Freigabe Senden" über eine Sende-Signalleitung intern des zentralen Rechners (CPU) durch entsprechende Einspeisung eines Fehlermeldesignales ausgelöst wird.

7. Vorrichtung oder Verfahren nach Anspruch 6, dadurch gekennzeichnet, daß bei Einspeisung des Fehlermeldesignales in den zentralen Rechner (CPU) von der Überwachungseinrichtung (Watchdog) auch ein optisches und/oder akustisches Alarmsignal über eine entsprechende Alarmeinrichtung (17) ausgelöst wird.

8. Vorrichtung nach Anspruch 1, dadurch gekennzeichnet, daß die Überwachungseinrichtung (Watchdog 16) hintereinandergeschaltet einen Vergleicher (23), ein NAND-Gatter (25) und zwei Monoflops (29, 30) und des weiteren einen Pseudozufalls-Zahlengenerator (26) aufweist, in welchen Vergleicher (23) programmgesteuert vom Rechner (CPU) ein Kontrollsignal in Form eines Kontroll-bzw. Datenwortes von beispielsweise 8 bit eingespeist und dort mit einem vom Pseudozufalls-Zahlengenerator (26) erzeugten und ebenfalls eingespeisten Prüf-bzw. Testwort verglichen und bei vollständiger Übereinstimmung am Ausgang ein zum einen Eingang des NAND-Gatters (25) gelangender Triggerimpuls ausgegeben wird, der bei gleichzeitigem Vorhandensein eines vom Rechner (CPU) ausgegebenen und dem zweiten Eingang des NAND-Gatters (25) zugeführten Kontrollsignales zum ersten Monoflop (29) gelangt, dessen Abfall ein Quittungssignal an den Rechner (CPU) rückleitet und das nachgeschaltete Monoflop (30) in Gang setzt, dessen Abfall wiederum den Schiebetakt des Pseudozufalls-Zahlengenerators (26) bestimmt und ebenso wie der Abfall des ersten Monoflops (29) ein Signal für eine etwaige Aktivierung einer Alarmeinrichtung (17) liefert.

Fig. 1

Fig. 2

FIG.3